# EUROPÄISCHE PATENTSCHRIFT

(11) **EP 2 728 305 B1**
(45) Veröffentlichungstag und Bekanntmachung des Hinweises auf die Patenterteilung: **29.06.2016**
(21) Anmeldenummer: 12190830.5
(22) Anmeldetag: 31.10.2012
(51) Int. Cl.: G01B 11/06, G01B 11/25

(54) **Verfahren und Lichtmuster zum Messen der Höhe oder des Höhenverlaufs eines Objekts**
Method and light patterns for measuring the height or the height curve of an object
Procédé et motif lumineux pour mesurer la hauteur ou le trajet en hauteur d'un objet

(43) Veröffentlichungstag der Anmeldung: 07.05.2014
(73) Patentinhaber: VITRONIC Dr.-Ing. Stein Bildverarbeitungssysteme GmbH, 65189 Wiesbaden (DE)
(72) Erfinder: Hoffmann, Burghard, 65232 Taunusstein (DE); Tzschichholtz, Ingo, 64197 Wiesbaden (DE)
(74) Vertreter: Müller, Thomas Michael

(56) Entgegenhaltungen:
- WO-A1-2004/083778
- WO-A1-2007/059780
- DE-A1-102007 057 771
- US-A1- 2009 161 966

## Beschreibung

Die Erfindung betrifft ein Verfahren zum Messen der Höhe oder des Höhenverlaufs eines Objekts, wobei das Verfahren die folgenden Verfahrensschritte umfasst: Projizieren eines Lichtmusters in Form aufeinanderfolgender codierter Bildelemente in einer Erstreckung in Richtung einer Querachse auf das Objekt mittels einer Lichtquelle, wobei die Bildelemente jeweils zumindest ein Codiermerkmal aufweisen und zusammen ein Codewort definieren, wobei Bildelementgruppen aus einer Abfolge einer vorbestimmten Anzahl von aufeinanderfolgenden Bildelementen jeweils individuelle genau einmal innerhalb des Codeworts existierende Teilcodewörter definieren, wobei unmittelbar benachbarte Bildelementgruppen teilweise dieselben Bildelemente umfassen und wobei jede Bildelementgruppe einer bestimmten Referenzposition in Richtung der Querachse bezogen auf eine Referenzebene zugeordnet ist, Erfassen des Lichtmusters mittels eines Bildsensors, der versetzt zur Lichtquelle angeordnet ist, Ermitteln der Positionen in Richtung der Querachse der Bildelementgruppen und Bestimmen der Höhe des Objekts anhand der ermittelten Position der Bildelementgruppen im Vergleich zur jeweiligen Referenzposition.

Darüber hinaus betrifft die Erfindung ein Lichtmuster zur Verwendung bei einem Verfahren zum Messen der Höhe oder des Höhenverlaufs eines Objekts, wobei das Lichtmuster in einer Erstreckung in Richtung einer Querachse aufeinanderfolgende codierte Bildelemente jeweils zumindest ein Codiermerkmal aufweisen und zusammen ein Codewort definieren, wobei Bildelementgruppen aus einer Abfolge einer vorbestimmten Anzahl von aufeinanderfolgenden Bildelementen jeweils individuelle Teilcodewörter definieren, wobei jede Bildelementgruppe einer bestimmten Referenzposition in Richtung der Querachse bezogen auf eine Referenzebene zugeordnet ist und wobei zwei unmittelbar benachbarte Bildelementgruppen teilweise dieselben Bildelemente umfassen.

Ein vorangehend beschriebenes Verfahren und ein vorangehend beschriebenes Lichtmuster sind aus der WO 2004/083778 A1 bekannt. Das Verfahren wird dort verwendet, um das Oberflächenprofil eines Objekts zu scannen. Aus der DE 10 2007 057 771 A1 sind ein Verfahren und eine Vorrichtung bekannt, die vornehmlich zur Volumenermittlung von Paketen in Paketsortierungsanlagen verwendet, wobei die Pakete auf Fördersystemen transportiert werden. Das Fördersystem kann ein oder mehrere Förderbänder oder mehrere hintereinander angetriebene Förderrollen umfassen, auf denen die zu vermessenden Pakete befördert werden. Die Vorrichtung zum Messen der Höhe oder des Höhenverlaufs eines Objekts bzw. eines Pakets ist hierbei ortsfest angeordnet und kann zum Beispiel eine Brücke über das Förderband oder die Förderrollen umfassen, welche quer zur Förderrichtung angeordnet ist und an der die einzelnen Komponenten der Vorrichtung befestigt sind. Die Vorrichtung umfasst einen Linearbildsensor, der quer zu einer Transportrichtung des Fördersystems angeordnet ist. Ferner ist wenigstens eine Lichtquelle vorgesehen, die kollinear zu dem Linearbildsensor und seitlich versetzt zu diesem angeordnet ist. Die Lichtquelle produziert eine eindeutig gemusterte Lichtsequenz über die Breite des Fördersystems und die sich bewegende Oberfläche. Diese Lichtsequenz wird reflektiert und vom Linearbildsensor erfasst. Die Lichtsequenz wird somit zunächst auf das Förderband quer zur Transportrichtung projiziert. Der Linearbildsensor erfasst diese Lichtsequenz aus einer relativ zur Lichtquelle seitlich verschobenen Position. Pakete werden mittels des Förderbands durch die Lichtsequenz bewegt. Hierbei entsteht aufgrund der versetzten Anordnung des Linearbildsensors ein Versatz des vom Paket reflektierten Teils der Lichtsequenz in einer Richtung der Längserstreckung der Lichtsequenz, also quer zur Transportrichtung. Dieser Versatz bzw. diese Verschiebung des vom Paket reflektierten Teils der Lichtsequenz ist proportional zur Höhe des Pakets, so dass dann anhand der Breite des verschobenen Teils der Lichtsequenz, der Transportgeschwindigkeit und der Größe des Versatzes auf das Volumen des Pakets geschlossen werden kann.

Bei der Lichtsequenz handelt es sich um eine räumlich eindeutige Strichanordnung, die mittels einer Laserbeleuchtungsvorrichtung erzeugt wird, welche eine Beugungslinse (DOE, diffraktives optisches Element) umfasst. Die räumlich eindeutige Strichanordnung umfasst eine Reihe von langen beleuchteten Strichen und kurzen beleuchteten Strichen. Diese sind durch kurze leere Zwischenräume und lange leere Zwischenräume voneinander getrennt. Die Strichanordnung ist demnach mit einem Barcode zu vergleichen. Die Strichanordnung enthält 199 Codeworte, wobei ein Codewort durch sechs Elemente festgelegt ist. Als Element ist ein beleuchteter Strich oder ein leerer (nicht beleuchteter) Zwischenraum zu verstehen. Die Codeworte sind hierbei hintereinander sequentiell angeordnet. Das eindeutige Muster ist durch 78 Worte festgelegt und wiederholt sich dreimal über die Breite des Förderbandes. Somit kann innerhalb eines der drei eindeutigen Muster jedes einzelne Codewort erkannt und identifiziert werden, wobei dann auch die Position des Codeworts über die Breite des Förderbandes bekannt ist. Somit kann bei einem Versatz des Codeworts das Ausmaß des Versatzes und somit die Höhe des Pakets ermittelt werden.

Die Problematik besteht darin, dass zwischen langen und kurzen beleuchteten Strichen und zwischen langen und kurzen leeren (nicht beleuchteten) Zwischenräumen unterschieden werden muss. Dies kann in der Praxis dann zu Problemen führen, wenn Pakete mit unterschiedlichen Oberflächen, z.B. hellen und dunklen Oberflächen, sortiert werden. Bei hellen Oberflächen wird das Lichtmuster stärker reflektiert als bei dunklen Oberflächen, so dass es zu einer Überstrahlung kommen kann. Eine Überstrahlung zeichnet sich dadurch aus, dass der entsprechend überstrahlte beleuchtete Strich auf der vom Linearbildsensor erfassten Abbildung länger erscheint als ein nicht überstrahlter Strich, der beispielsweise von einer dunklen Oberfläche reflektiert wird. Ferner kann bei zwei nebeneinander angeordneten Überstrahlten beleuchteten Strichen der leere Zwischenraum schmaler erscheinen. Dieses Phänomen kann zu einem falschen oder zu keinem Erkennen eines Codeworts führen.

Darüber hinaus weisen Bildsensoren eine Tiefenschärfe auf, die am Rand der Tiefenschärfenbereiche zu Unschärfen führen kann. Unschärfen führen ebenfalls zu dem Phänomen, dass ein beleuchteter Strich breiter abgebildet wird als er tatsächlich ist und entsprechend leere unbeleuchtete Zwischenräume zwischen zwei unscharf dargestellten bzw. abgebildeten beleuchteten Strichen schmaler erscheinen.

Darüber hinaus muss prinzipiell immer ein gesamtes Codewort gelesen bzw. erkannt werden. Bei sequentiell hintereinander angeordneten Codeworten, die jeweils aus sechs Elementen bestehen, sind eine Vielzahl von einzelnen Elementen zu lesen. Wenn beispielsweise erst beim zweiten Element eines Codeworts mit dem Lesen begonnen werden kann, dann sind die restlichen Elemente des ersten Codeworts zu lesen und alle Elemente des darauffolgenden Codeworts, bis ein vollständiges Codewort, hier das zweite Codewort, erkannt wird.

Die vorliegende Erfindung hat sich zur Aufgabe gestellt, die Fehleranfälligkeit zu reduzieren.

Gelöst wird die Aufgabe durch ein Verfahren gemäß Anspruch 1.

Das gesamte Lichtmuster bildet somit über seine gesamte Erstreckung ein Codewort, wobei beliebige aufeinanderfolgende Bildelemente Bildelementgruppen bilden, die jeweils ein individuelles Teitcodewort definieren. Hierbei umfassen unmittelbar benachbarte Bildelementgruppen teilweise dieselben Bildelemente. Die Teilcodewörter überlappen demnach und sind nicht sequentiell hintereinander angeordnet. Eine Bildelementgruppe kann z.B. aus fünf Bildelementen bestehen, die unmittelbar nebeneinander angeordnet sind. Diese Bildelemente können beispielsweise die Bildelemente an der ersten bis fünften Position des Lichtmusters umfassen. Die unmittelbar benachbarte Bildelementgruppe umfasst dann zum Beispiel die fünf Bildelemente an den Positionen zwei bis sechs. Dies bedeutet, dass bei diesem Beispiel zur Erfassung eines Teilcodeworts immer nur die Anzahl der Bildelemente, die ein Teilcodewort definieren, gelesen werden müssen, da an jeder beliebigen Stelle des Lichtmusters fünf beliebige Bildelemente gelesen werden können, die dann ein Teilcodewort ergeben. Nur in dem Fall, in dem in dem voran genannten Beispiel die Bildelementgruppen nicht unmittelbar aufeinanderfolgen, sondern zum Beispiel über zwei Bildelemente zueinander versetzt angeordnet sind, d.h. dass die zweite Bildelementgruppe die Bildelemente einer dritten bis zur siebten Position umfassen, sind entsprechend mehr Bildelemente zu lesen, um ein Teilcodewort identifizieren zu können.

Jede Bildelementgruppe ist einer bestimmten Referenzposition zugeordnet. Wenn das Verfahren zur Volumenbestimmung von Paketen auf einem Förderband eingesetzt wird, bestimmt die Referenzposition die Position der jeweiligen Bildelementgruppe auf dem Förderband quer zur Transportrichtung. Wird nun ein Paket durch das Lichtmuster hindurch befördert, werden die Bildelementgruppen, welche von der Paketoberfläche reflektiert werden, in der vom Bildsensor erfassten Abbildung quer zur Transportrichtung verschoben, wobei anhand des Ausmaßes der Verschiebung auf die Höhe des Pakets geschlossen werden kann, da die Referenzposition bekannt ist. Das Förderband bildet hierbei eine Referenzoberfläche, auf die sich die räumliche Referenzposition bezieht.

Das Codiermerkmal ist die Position des Bildelements quer zur Erstreckung des Lichtmusters, im Fall einer Paketvolumenbestimmung wäre dies die Position des Bildelements in Transportrichtung. Die Bildelemente können demnach bezogen auf eine Achse quer zur Transportrichtung in unterschiedlichen Positionen in Transportrichtung ausgerichtet sein. Bei den Bildelementen selber handelt es sich um Punkte. Das Codiermerkmal kann in nicht unter die Erfindung fallenden Alternativbeispielen jedoch auch die Länge des Bildelements in Richtung quer zur Erstreckung des Lichtmusters sein oder die Wellenlänge des Lichts des Bildelements.

Vorzugsweise handelt es sich bei den Bildelementen, wie bereits oben erwähnt, um beabstandet zueinander angeordnete Lichtpunkte, die also keine Überlappungen aufweisen und die alle dieselbe Größe und Form aufweisen.

Bei der Anordnung von Lichtpunkten in unterschiedlichen Positionen quer zur Erstreckung des Lichtmusters, also zum Beispiel in Transportrichtung eines Förderbandes, sind die Lichtpunkte in mehreren Zeilen, vorzugsweise in vier Zeilen, entlang der Erstreckung des Lichtmusters angeordnet. Das Lichtmuster bildet zudem in Richtung der Erstreckung des Lichtmusters nebeneinander angeordnete Spalten, die also jeweils in Transportrichtung ausgerichtet sind. Je Spalte ist genau ein Lichtpunkt vorgesehen.

Die Aufgabe wird darüber hinaus durch ein Lichtmuster gemäß Anspruch 7 gelöst.

Die Erfindung wird im folgenden anhand der Zeichnungen näher erläutert. Hierin zeigt:
- Figur 1: eine schematische Darstellung einer erfindungsgemäßen Vorrichtung in Transportrichtung eines Förderbandes,
- Figur 2: einen Ausschnitt eines Lichtmusters und
- Figur 3: eine perspektivische Darstellung einer erfindungsgemäßen Vorrichtung.

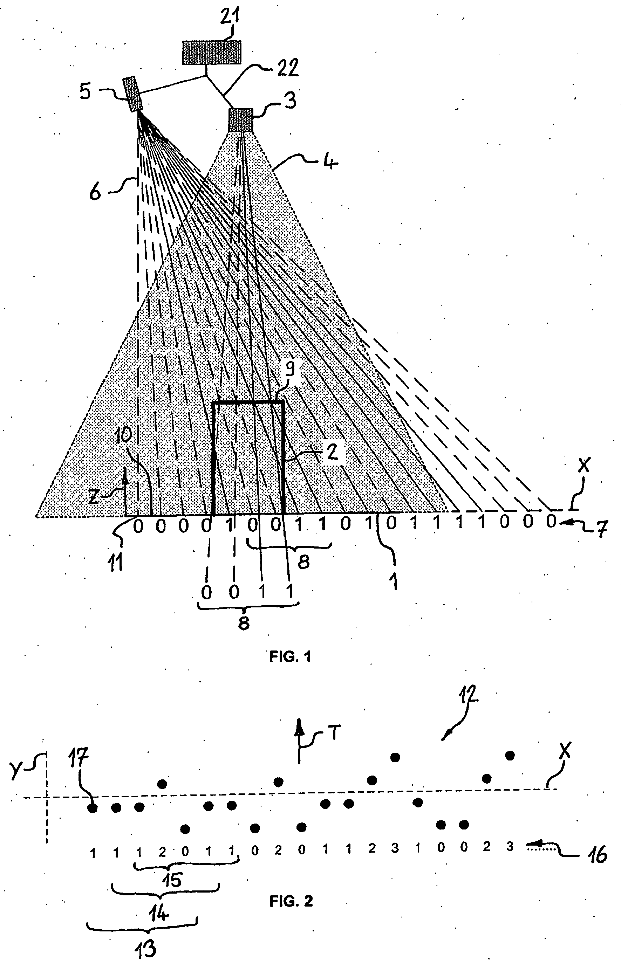

Figur 1 zeigt schematisch eine Messvorrichtung für ein Förderband in einer Anlage zur Paketsortierung. Es ist ein Förderband 1 vorgesehen, welches in einer Transportrichtung T senkrecht zur Bildebene bewegt wird. Die Bildebene entspricht hierbei einer Messebene der Vorrichtung. Das Förderband 1 weist eine Oberfläche 10 auf, auf der Pakete 2 aufgelegt werden. Gezeigt ist beispielhaft ein Paket 2 mit einem rechteckigen Querschnitt. Anstelle eines Förderbands 1 können auch andere Elemente zum Befördern von Paketen vorgesehen sein, wie beispielsweise angetriebene Förderwalzen. Vertikal über dem Förderband 1 und in etwa mittig zu diesem ist ein Bildsensor in Form einer Kamera 3 angeordnet. Die Kamera 3 hat einen Sichtbereich 4, der durch gestrichelte Linien angedeutet ist. Der Sichtbereich 4 der Kamera 3 ist auf der Messebene angeordnet, welche senkrecht zur Transportrichtung ausgerichtet ist.

Seitlich in Richtung parallel zu einer Querachse X, welche das Förderband 1 quer zur Transportrichtung kreuzt, ist eine Lichtquelle in Form eines Lasers 5 angeordnet. Der Laser 5 projiziert in einer Projektionsebene 6 ein Lichtmuster auf die Oberfläche 10 des Förderbands 1. Die Projektionsebene 6 ist ebenfalls durch gestrichelte Linien angedeutet. Die Projektionsebene 6 ist koplanar zum Sichtbereich 4 angeordnet. Grundsätzlich können auch andere Lichtquellen als ein Laser 5 vorgesehen sein. Der Begriff "Ebene" umfasst Lösungen, bei denen z.B. der Sichtbereich 4 auch in Richtung zur Transportrichtung bzw. senkrecht zur Bildebene aufgefächert ist. Dies trifft auch für die Projektionsebene 6 zu. Insbesondere dann, wenn wie nachfolgend noch erläutert wird, das Lichtmuster nicht nur eine Erstreckung in Richtung der Querachse X aufweist, sondern auch eine Erstreckung in Richtung der Transportrichtung, findet eine Auffächerung des Laserstrahls und damit der Projektionsebene 6 in Richtung der Transportrichtung T statt. Hierbei ist darauf zu achten, dass der Sichtbereich 4 der Kamera 3 einen Bereich auf dem Förderband 1 abdeckt, der zumindest genauso groß wie oder größer ist als der Bereich der Projektion des Lichtmusters. Wenn der Sichtbereich auf dem Förderband 1 in Transportrichtung T größer ist als das projizierte Lichtmuster ergibt sich der Vorteil, dass eine genaue koplanare Ausrichtung des Sichtbereichs 4 und der Projektionsebene 6 durch Justieren der Kamera 3 und des Lasers 5 nicht erforderlich ist, da auch bei einer geringfügig winkligen Anordnung um eine Hochachse Z des Sichtbereichs 4 zur Projektionsebene 6 das Lichtmuster vollständig innerhalb des Sichtbereichs 4 angeordnet ist. Hierzu ist es erforderlich, dass es sich bei der Kamera 3 um eine Matrixkamera handelt.

Schematisch ist zudem dargestellt, dass das projizierte Lichtmuster auf dem Förderband 1 durch einzelne Bildelemente 11 aufgebaut ist, wobei die Bildelemente 11 im Beispiel gemäß Figur 1 binär codiert sind. Jedes Bildelement 11 ergibt somit eine binäre Zahl 0 oder 1. Zusammen bilden alle Bildelemente 11 ein Codewort 7 über die Breite des Förderbands 1. Das Codewort 7 ist im vorliegenden Fall aus Teilcodewörtern mit vier Bildelementen 11, die eine Bildelementgruppe 8 bilden, dargestellt. Beispielhaft ist hier ein Teilcodewort 8 markiert, welches das Binärwort 0011 definiert. Das Teilcodewort 8 ist eindeutig und individuell innerhalb des Codeworts 7 identifizierbar. Das Teilcodewort 8 existiert genau einmal innerhalb des Codeworts 7. Dem Teilcodewort 8 ist eine genaue Position entlang der Querachse X zugeordnet, wobei sich dies auf eine Referenzebene, welche durch die Oberfläche 10 des Förderbands 1 dargestellt ist, bezieht. Wird somit das Codewort 8 erkannt, ist klar, an welcher Stelle sich dieses auf der Referenzebene befindet.

Wird nun das Paket 2 durch die Projektionsebene 6 bewegt, werden einzelne Bildelemente 11 des Lichtmusters von der Oberfläche 9 des Pakets 2 reflektiert und von der Kamera 3 aufgenommen. Da der Laser 5 seitlich versetzt zur Kamera 3 angeordnet ist, verschiebt sich im von der Kamera 3 aufgenommenen Bild im vorliegenden Fall das Teilcodewort 8 seitlich nach rechts entlang der Querachse X. Obwohl das Teilcodewort 8 nur teilweise in vertikaler Überdeckung mit dem Paket 2 angeordnet ist, wird das verständige Teilcodewort 8 von der Oberfläche 9 des Pakets 2 reflektiert. Hierbei findet im vorliegenden Fall eine seitliche Verschiebung um zwei Bildelemente 11 statt. Durch ein herkömmliches Triangulationsverfahren lässt sich dann anhand der Größe der Verschiebung des Teilcodeworts 8 die Höhe der Oberfläche 9 des Pakets 2 errechnen. Hierzu dient eine Bildverarbeitungseinheit 21, zum Beispiel in Form eines Computers, die über Datenleitungen 22 mit der Kamera 3 und ggf. auch mit dem Laser 5 verbunden ist.

Figur 2 zeigt einen Ausschnitt aus einem bevorzugten Ausführungsbeispiel eines Lichtmusters 12, welches ein Codewort 16 definiert. Das Lichtmuster 12 besteht aus einzelnen Bildelementen 17 in Form von Lichtpunkten, die z.B. mittels eines Lasers und eines DOE (diffraktives optisches Element) gebildet sein können. Die einzelnen Bildelemente 17 sind in Richtung zur Querachse X und damit quer zur Transportrichtung T nebeneinander angeordnet, und zwar in vier Zeilen. Die Zeilen sind in Längsrichtung Y, welche parallel zur Transportrichtung T ausgerichtet ist, hintereinander angeordnet. Die Bildpunkte 17 sind zudem in überdie Querrichtung X nebeneinander angeordneten Spalten angeordnet, wobei in jeder Spalte genau ein Bildelement 17 vorgesehen ist. Die Position des jeweiligen Bildelements 17 in Längsrichtung Y bzw. in einer der Reihen stellt ein Codiermerkmal dar, über welches jedes einzelne Bildelement 17 codiert ist. So kann jedem Bildelement 10 eine Zahl zugeordnet werden, wobei allen Bildelemente 17 in der in Figur 2 dargestellten untersten Reihe die Zahl 0, in der darüber befindlichen zweiten Reihe die Zahl 1, in der dritten Reihe die Zahl 2 und in der vierten Reihe die Zahl 3 zugeordnet wird. Somit ergibt sich das in Figur 2 unter dem Lichtmuster 12 dargestellte Codewort 16. Das Codewort 16 bildet mit jeweils fünf beliebigen nebeneinander angeordneten Bildelementen 17 Bildelementgruppen bzw. Teilcodewörter. Das äußerst linke erste Teilcodewort 13 weist die Codierung "11120" auf. Ein Bildelement weiter rechts befindet sich ein zweites Teilcodewort 14 mit der Codierung "11201 ". Ein weiteres darauf folgendes drittes Teilcodewort 15 hat die Codierung "12011 ". Hierbei überlappen sich alle genannten Bildelementgruppen bzw. Teilcodewörter 13, 14, 15, weisen also teilweise dieselben Bildelemente 17 auf. Das erste Teilcodewort 13 hat somit vier gemeinsame Bildelemente mit dem zweiten Teilcodewort 14. Vorteilhaft wirkt sich hierbei aus, dass zur Identifizierung eines Teilcodeworts lediglich fünf Bildelemente 7 ermittelt werden müssen, um eine eindeutige Zuordnung dieses Teilcodeworts innerhalb des Codeworts 16 vornehmen zu können.

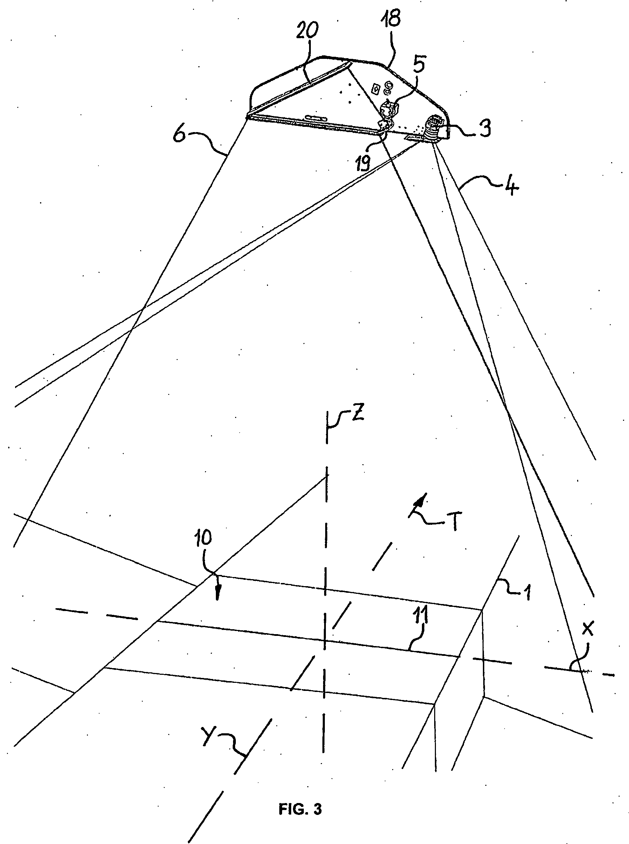

Figur 3 zeigt ein Beispiel einer Vorrichtung zum Messen der Höhe und des Höhenverlaufs eines Objekts. Bauteile, die von ihrer Funktion her mit Bauteilen der Anordnung gemäß Figur 1 übereinstimmen, sind mit den gleichen Bezugszeichen versehen, auch wenn die Anordnung sich von der Anordnung gemäß Figur 1 unterscheidet.

Die Vorrichtung umfasst ein Gehäuse 18, in dem die Kamera 3 angeordnet ist. Die Kamera 3 weist den Sichtbereich 4 auf, der in der vorliegenden Darstellung perspektivisch zu erkennen ist. Hierbei ist auch zu erkennen, dass der Sichtbereich 4 der Kamera 3 sich nicht nur in Richtung der Querachse X auffächert, sondern auch, wenn auch in geringerem Maße, in Richtung der Längsachse Y, d.h. parallel zur Transportrichtung. Innerhalb des Gehäuses 18 ist ferner der Laser 5 angeordnet, der das Lichtmuster in der Projektionsebene 6 projiziert. Es ist anzumerken, dass die Projektionsebene nicht rein mathematisch zu betrachten ist, sondern sich diese Projektionsebene ebenfalls in Richtung der Querachse X als auch in Richtung der Längsachse Y auffächert. Die Auffächerung der Projektionsebene 6 in Richtung der Längsachse Y ist jedoch geringer als die diejenige des Sichtbereichs 4. Sofern die Kamera 3 als Matrixkamera ausgebildet ist und das Lichtmuster in Transportrichtung schmaler ist als der Sichtbereich 4, kann rein rechnerbasiert eine Fehljustierung, also eine winklige Anordnung des Lichtmusters relativ zum Sichtbereich 4 der Kamera 3, ausgeglichen werden.

Der Laser 5 projiziert das Lichtmuster zunächst in etwa vertikal nach unten auf einen ersten Spiegel 19, von wo aus das Lichtmuster in Richtung der Querachse X seitlich auf einen zweiten Spiegel 20 projiziert wird, der das Lichtmuster dann nach unten auf das Förderband reflektiert. Hierbei wird das Lichtmuster ausgehend vom Laser 5 in Richtung der Querachse X immer weiter aufgefächert, wobei bereits beim Austritt aus dem Gehäuse 18 ein weit aufgefächertes Lichtmuster vorhanden ist. Würde die Umlenkung über die Spiegel 19, 20 nicht innerhalb des Gehäuses 18 stattfinden, müsste der Laser 5 deutlich höher über dem Förderband angeordnet werden. Durch die gezeigte Anordnung wird daher erheblicher Bauraum eingespart.

### Bezugszeichenliste

- 1: Förderband
- 2: Paket
- 3: Kamera
- 4: Sichtbereich
- 5: Laser
- 6: Projektionsebene
- 7: Codewort
- 8: Teilcodewort
- 9: Oberfläche
- 10: Oberfläche
- 11: Bildelement
- 12: Lichtmuster
- 13: erstes Teilcodewort
- 14: zweites Teilcodewort
- 15: drittes Teilcodewort
- 16: Codewort
- 17: Bildelement
- 18: Gehäuse
- 19: erster Spiegel
- 20: zweiter Spiegel
- 21: Bildverarbeitungseinheit
- 22: Datenleitung

- X: Querachse
- Y: Längsachse
- Z: Hochachse
- T: Transportrichtung

## Patentansprüche

1. Verfahren zum Messen der Höhe oder des Höhenverlaufs eines Objekts (2), wobei das Verfahren die folgenden Verfahrensschritte umfasst:
Projizieren eines Lichtmusters (12) in Form aufeinanderfolgender codierter Bildelemente (11, 17) in einer Erstreckung in Richtung einer Querachse (X) auf das Objekt (2) mittels einer Lichtquelle (5),
wobei die Bildelemente (11, 17) jeweils zumindest ein Codiermerkmal aufweisen und zusammen ein Codewort (7, 16) definieren,
wobei Bildelementgruppen aus einer Abfolge einer vorbestimmten Anzahl von aufeinanderfolgenden Bildelementen (11) jeweils eindeutige und individuelle genau einmal innerhalb des Codeworts (7, 16) existierende Teilcodewörter (8, 13, 14, 15) definieren,
wobei unmittelbar benachbarte Bildelementgruppen teilweise dieselben Bildelemente (11, 17) umfassen, Erfassen des Lichtmusters (12) mittels eines Bildsensors (3), der versetzt zur Lichtquelle (5) angeordnet ist,
wobei jede Bildelementgruppe einer bestimmten Referenzposition im erfassten Lichtmuster in Richtung der Querachse (X) bezogen auf eine Referenzebene zugeordnet ist, wobei die Referenzebene durch eine Oberfläche, auf der das Objekt aufgelegt ist, dargestellt ist,
Ermitteln der Positionen in Richtung der Querachse (X) der Bildelementgruppen im erfassten Lichtmuster und
Bestimmen der Höhe des Objekts (2) anhand der ermittelten Position der Bildelementgruppen im Vergleich zur jeweiligen Referenzposition,
**dadurch gekennzeichnet,**
**dass** die Bildelemente (11,17) einzelne Lichtpunkte sind und
**dass** das Codiermerkmal die Position der Lichtpunkte in Richtung quer zur Erstreckung des Lichtmusters (12) in Richtung der Abfolge der einzelnen Bildelemente (11, 17) ist, wobei die Lichtpunkte in mehreren Zeilen entlang der Erstreckung des Lichtmusters (12) angeordnet sind.

2. Verfahren nach Anspruch 1,
**dadurch gekennzeichnet,**
**dass** zwei benachbarte Bildelementgruppen bis auf ein Bildelement (11, 17) dieselben Bildelemente (11, 17) umfassen.

3. Verfahren nach einem der vorangehenden Ansprüche,
**dadurch gekennzeichnet,**
**dass** die Bildelemente (11, 17) beabstandet zueinander angeordnete Lichtpunkte sind.

4. Verfahren nach einem der vorangehenden Ansprüche,
**dadurch gekennzeichnet,**
**dass** das Objekt (2) in einer Transportrichtung (T) durch eine Messebene (4) bewegt wird.

5. Verfahren nach Anspruch 4,
**dadurch gekennzeichnet,**
**dass** die Lichtquelle (5) das Lichtmuster (12) in der Messebene projiziert.

6. Verfahren nach Anspruch 5,
**dadurch gekennzeichnet,**
**dass** der Bildsensor (3) innerhalb der Messebene angeordnet ist.

7. Lichtmuster zur Verwendung bei einem Verfahren zum Messen der Höhe oder des Höhenverlaufs eines Objekts (2),
wobei das Lichtmuster (12) in einer Erstreckung in Richtung einer Querachse (X) aufeinanderfolgende codierte Bildelemente (11, 17) aufinreist, die jeweils zumindest ein Codiermerkmal aufweisen und zusammen ein Codewort definieren,
wobei Bildelementgruppen aus einer Abfolge einer vorbestimmten Anzahl von aufeinanderfolgenden Bildelementen (11, 17) jeweils eindeutige und individuelle genau einmal innerhalb des Codeworts existierende Teilcodewörter (8, 13, 14, 15) definieren,
wobei zwei unmittelbar benachbarte Bildelementgruppen teilweise dieselben Bildelemente (11, 17) umfassen,
**dadurch gekennzeichnet,**
**dass** die Bildelemente (11,17) einzelne Lichtpunkte sind und
**dass** das Codiermerkmal die Position der Lichtpunkte in Richtung quer zur Erstreckung des Lichtmusters (12) in Richtung der Abfolge der einzelnen Bildelemente (11, 17) ist, wobei die Lichtpunkte in mehreren Zeilen, vorzugsweise vier Zeilen, entlang der Erstreckung des Lichtmusters (12) angeordnet sind.

## Claims

1. Method for measuring the height or the course of the height of an object (2), wherein the method comprises the following method steps:
projecting a light pattern (12) in form of coded image elements (11, 17), following one another, in an extension in direction of the transversal axis (X) onto the object (2) by means of a light source (5),
wherein the image elements (11, 17) have, respectively, at least one coding feature and define together a code word (7, 16),
wherein groups of image elements of a sequence of a predetermined number of consecutive image elements (11), respectively, define unique and individual partial code words (8, 13, 14, 15) existing exactly once within the code word (7, 16),
wherein directly adjacent groups of image elements comprise partially the same image elements (11, 17),
capturing the light pattern (12) by means of an image sensor (3), which is arranged off-set to the light source (5),
wherein each group of image elements is assigned to a specific reference position in the captured light pattern in direction of the transversal axis (X) relative to a reference plane, wherein the reference plane is represented by a surface, on which the object is arranged,
determining the positions in direction of the transversal axis (X) of the groups of image elements in the captured light pattern and
determining the height of the object (2) by means of the determined position of the groups of image elements in comparison to the respective reference position,
**characterised in**
**that** the image elements (11, 17) are individual light points and
**that** the coding feature is the position of the light points in direction transversally to the extension of the light pattern (12) in direction of the sequence of the individual image elements (11, 17), wherein the light points are arranged in a plurality of lines along the extension of the light pattern (12).

2. Method according to claim 1,
**characterised in**
**that** two adjacent groups of image elements comprise the same image elements (11, 17) with the exception of one image element (11, 17).

3. Method according to one of the preceding claims,
**characterised in**
**that** the image elements (11, 17) are light points arranged distanced to each other.

4. Method according to one of the preceding claims,
**characterised in**
**that** the object (2) is moved in a transportation direction (T) through a measuring plane (4).

5. Method according to claim 4,
**characterised in**
**that** the light source (5) projects the light pattern (12) in the measuring plane.

6. Method according to claim 5,
**characterised in**
**that** the image sensor (3) is arranged within the measuring plane.

7. Light pattern for use in a method for measuring the height or the course of the height of an object (2),
wherein the light pattern (12) has in an extension in direction of a transversal axis (X) consecutive coded image elements (11, 17), which respectively have at least one coding feature and define together a code word,
wherein groups of image elements of a sequence of a specific number of consecutive image elements (11, 17), respectively, define unique and individual partial code words (8, 13, 14, 15) existing exactly once within the code word,
wherein two directly adjacent groups of image elements comprise partially the same image elements (11, 17),
**characterised in**
**that** the image elements (11, 17) are individual light points and
**that** the coding feature is the position of the light points in direction transversally to the extension of the light pattern (12) in direction of the sequence of the individual image elements (11, 17), wherein the light points are arranged in a plurality of lines, preferably four lines, along the extension of the light pattern (12).

## Revendications

1. Procédé et motif lumineux pour mesurer la hauteur ou le trajet en hauteur d'un objet (2), le procédé comprenant les étapes de procédé suivantes :
projection d'un motif lumineux (12) sous la forme de pixels codés consécutifs (11, 17) sur une étendue en direction d'un axe transversal (X) sur l'objet (2) au moyen d'une source de lumière (5),
dans lequel les pixels (11, 17) présentent respectivement au moins une caractéristique de codage et définissent conjointement un mot de code (7, 16),
dans lequel des groupes de pixels définissent respectivement des mots de code partiels (8, 13, 14, 15) univoques et individuels, présents exactement une fois dans le mot de code (7, 16), à partir d'une séquence d'un nombre prédéfini de pixels consécutifs (11),
dans lequel des groupes de pixels immédiatement voisins comprennent partiellement les mêmes pixels (11, 17),
détection du motif lumineux (12) au moyen d'un capteur d'image (3) disposé en décalage par rapport à la source de lumière (5),
dans lequel chaque groupe de pixels est attribué à une position de référence dans le motif lumineux détecté, dans la direction de l'axe transversal (X) par rapport à un plan de référence,
dans lequel le plan de référence est représenté par une surface supérieure sur laquelle est déposé l'objet,
détermination des positions dans la direction de l'axe transversal (X) des groupes de pixels dans le motif lumineux détecté, et
détermination de la hauteur de l'objet (2) à l'aide de la position déterminée des groupes de pixels, en comparaison avec la position de référence respective,
**caractérisé en ce que**
les pixels (11, 17) sont des points lumineux individuels, et **en ce que**
la caractéristique de codage est la position des points lumineux dans la direction transversale à l'étendue du motif lumineux (12) dans la direction de la séquence des pixels individuels (11, 17), les points lumineux étant disposés en plusieurs rangées le long de l'étendue du motif lumineux (12).

2. Procédé selon la revendication 1,
**caractérisé en ce que**
deux groupes de pixels voisins comprennent les mêmes pixels (11, 17) à l'exception d'un pixel (11, 17).

3. Procédé selon l'une des revendications précédentes, **caractérisé en ce que**
les pixels (11, 17) sont des points lumineux disposés de façon espacée les uns par rapport aux autres.

4. Procédé selon l'une des revendications précédentes, **caractérisé en ce que**
l'objet (2) est déplacé dans une direction de transport (T) à travers un plan de mesure (4).

5. Procédé selon la revendication 4,
**caractérisé en ce que**
la source de lumière (5) projette le motif lumineux (12) dans le plan de mesure.

6. Procédé selon la revendication 5,
**caractérisé en ce que**
le capteur d'image (3) est disposé dans le plan de mesure.

7. Motif lumineux destiné à être utilisé dans le cadre d'un procédé pour la mesure de la hauteur ou du trajet en hauteur d'un objet (2),
dans lequel le motif lumineux (12) présente des pixels codés consécutifs (11, 17) sur une étendue dans la direction d'un axe transversal (X), lesquels présentent respectivement au moins une caractéristique de codage et définissent conjointement un mot de code,
dans lequel des groupes de pixels définissent respectivement des mots de code partiels (8, 13, 14, 15) univoques et individuels, présents exactement une fois dans le mot de code, à partir d'une séquence d'un nombre prédéfini de pixels consécutifs (11, 17),
dans lequel deux groupes de pixels immédiatement voisins comprennent partiellement les mêmes pixels (11, 17),
**caractérisé en ce que**
les pixels (11, 17) sont des points lumineux individuels, et **en ce que**
la caractéristique de codage est la position des points lumineux dans la direction transversale à l'étendue du motif lumineux (12) dans la direction de la séquence des pixels individuels (11, 17), les points lumineux étant disposés en plusieurs rangées le long de l'étendue du motif lumineux (12).
